# EUROPEAN PATENT SPECIFICATION

(11) **EP 3 788 664 B1**
(45) Date of publication and mention of the grant of the patent: **03.09.2025**
(21) Application number: 19814754.8
(22) Date of filing: 04.06.2019
(51) Int. Cl.: H01M 10/04, H01M 10/12, H01M 10/14, H01M 50/406

(54) **BATTERY ELECTRODE PLATE PRODUCTION LINE AND METHOD**
BATTERIEELEKTRODENPLATTENHERSTELLUNGSLINIE UND VERFAHREN
CHAINE DE PRODUCTION DE PLAQUE D'ÉLECTRODE DE BATTERIE ET PROCÉDÉ

(30) Priority: 04.06.2018 US 201862680143 P
(43) Date of publication of application: 10.03.2021
(73) Proprietor: Wirtz Manufacturing Company, Inc., Port Huron, MI 48061-5006 (US)
(72) Inventor: WOOD, Edward F., Metamora, MI 48455 (US); MERCURIO, Scott A., Clyde, MI 48049-3812 (US); WIRTZ, Robert N., Royal Oak, MI 48067 (US)
(74) Representative: HWP Intellectual Property
(86) International application number: PCT/US2019/035332
(87) International publication number: WO 2019/236542

(56) References cited:
- CN-A- 105 390 734
- US-A- 5 146 958
- US-A1- 2010 075 215
- US-A1- 2010 075 215
- US-A1- 2011 146 064
- US-A1- 2011 293 988
- US-A1- 2014 083 562
- US-A1- 2017 341 163
- US-A1- 2017 341 163

## Description

### Technical Field

This disclosure relates to battery electrode plate assemblies and more particularly to a production line and method of making, pasting and applying separators to electrodes of battery plate assemblies.

### Background

Electric storage batteries may include bipolar plates and an electrolyte. A lead acid battery may include a plurality of bi-polar plates and a sulfuric acid electrolite. The bi-polar plate may include a frame or substrate with electrodes on both sides, an absorbant glass mat (AGM) separator with a positive paste (active material) applied to one of the electrodes and a negative paste with an AGM separator applied to the other electrode.

Prior approaches to applying the battery paste and an AGM separator to an electrode of a bi-polar battery plate have a low rate of mass production and require a significant capital investment for a specially designed production line and equipment to do so.

A system, apparatus and method for cutting battery grids or plates from a continuous strip of a plurality of connected battery grids are described in US 2017/341163 A1. The continuous strip moves toward a rotating cutter with at least two cutter blades with cutting edges equally circumferentially spaced apart and extending parallel to the cutter axis of rotation and a rotating cooperating anvil. The cutting edges and the anvil are rotated at the same tangential speed to cut in a nip between them a plate or grid from the continuous strip of connected grids. At a point upstream of the cutter, an electric signal indicative of each lug of the grid of the continuous strip moving past this point is used to control the speed of movement of the strip through the nip to cut a plate or grid from the continuous strip at a longitudinal speed which is essentially the same as the tangential speed of the cutting edges.

US 2014/083562 A1 describes a battery grid pasting system including a battery grid pasting machine, a sensing station, and a controller. The battery grid pasting machine includes a conveying apparatus confronting a hopper's dispensing end across a space, and includes a motor actuatable to cause variance of the space and hence variance of the amount of battery paste received on carried battery grids through the space. The sensing station senses a value of a property of a pasted battery grid. And the controller receives the sensed value of the property and controls actuation of the motor based in part or more on the received value.

Finally, a thin battery and a manufacturing method of a thin battery are described in US 2010/075215 A1. The thin battery comprises an anode material, a cathode material, two or more separator paper layers there between, and electrolyte. One of the outer separator paper layers has an anode material applied thereon, another separator paper layer being an outer layer on the opposite side having a cathode material applied thereon. The method of the invention for manufacturing such a thin battery is mainly characterized by the steps of wetting a separator paper with an electrolyte solution, applying an anode material on a first separator paper and applying a cathode material on a second separator paper. The separator papers are then combined by pressing them together so that the anode and cathode materials are outmost, respectively in order to form a layered structure. The combined layers are then cut in desired sizes.

### Summary

The present invention provides a line for making, pasting and applying separators to substrates for battery plates according to independent claim 1 and a method of making, pasting, and applying separators to substrates for batter plates according to independent claim 7. Further preferred embodiments result from the dependent claims.

A method of making, pasting and applying separators to substrates of a battery plate includes providing a longitudinally elongate web of separator material having first and second opposites sides, applying a layer of battery paste to one of the first and second sides of the web, severing the pasted web into a series of separate individual separators with paste on the one side, disposing a separate separator of the series on one of a series of substrates with the pasted one side facing the substrate on which it is disposed. To dispose an individual separator on a substrate, the separator is turned over end for end by reversing its direction of travel relative to the direction of travel of the web before such separator was severed from the web. After an individual separator is disposed on its associated substrate such substrate may be turned over and the foregoing steps repeated to dispose another individual separator on the other side of such substrate.

The substrate may include a planar panel portion with at least one and usually a plurality of spaced apart protuberances projecting outwardly of both sides of the panel and before pasting a corresponding clearance hole or holes may be formed through the web so that each pasted individual separator may be disposed on one substrate with each of the one or more protuberances received within a clearance hole of the separator deposited on the one substrate. The substrate may include an edge extending around the panel and projecting outwardly thereof and each individual separator may be disposed within the edge of its associated substrate.

A mass production line for making, pasting and applying an individual separator to a substrate includes advancing a longitudinally elongate web of separator material through a paster station to apply a layer of paste to one side of the web, severing the web to produce a series of separate individual separators of a desired predetermined length with paste on the one side, a transfer station disposing an individual separator on one of a series of substrates with the pasted one side facing the substrate on which it is disposed. Upstream of the paster station a wound roll of a web of separator material may be unwound from the roll and disposed on a moving belt advancing the web under a hopper of a pasting machine to apply paste to one side of the web, and downstream of the paster station the pasted web is received on a rotating transfer cylinder and the pasted web is separated into individual separators on the cylinder. The cylinder disposes one of the individual separators on one of a series of substrates being advanced with respect to the transfer cylinder. The transfer cylinder has vacuum ports retaining the individual separators on the cylinder and the vacuum is relieved to dispose the separators on the substrates. The separators are disposed on substrates being advanced in a direction generally opposite to the direction in which the pasted web is being advanced upstream of the transfer cylinder.

Upstream of the paster station, clearance holes may be formed through the web to register with protuberances of a separator. The clearance holes may be punched by a die and press mechanism or cut by rotary dies. The clearance holes may correspond to protuberances in the substrate so that an individual separator may be deposited on a substrate with the protuberances received in the clearance holes. A belt advancing the web through the paster station may have protrusions or bosses registering with and received in the clearance holes formed through the web so that paste is inhibited from being deposited in the clearance holes.

### Brief Description of the Drawings

The following detailed description of certain embodiments and best mode will be set forth with reference to the accompanying drawings, in which:
FIG. 1 is a pictorial view of a bipolar battery plate;
FIG. 2 is an enlarged sectional view taken on line 2-2 of Fig. 1;
FIG. 3 is an enlarged fragmentary sectional view of a portion of Fig. 2 within the circle 3;
FIG. 4 is an exploded view of the bipolar plate of Fig. 1;
FIG. 5 is an exploded view of a portion of the battery plate of Fig. 1 illustrating a separator and a layer of paste before they are disposed on a substrate of the battery plate;
FIG. 6 is a pictorial and somewhat diagrammatic view of a portion of a production line for making and pasting separators and disposing them on substrates for making battery plates;
FIG. 7 is a somewhat diagrammatic side view of the production line of Fig. 7; and
FIG. 8 is an enlarged sectional view of the upper run of the continuous belt of Fig. 7.

### Detailed Description

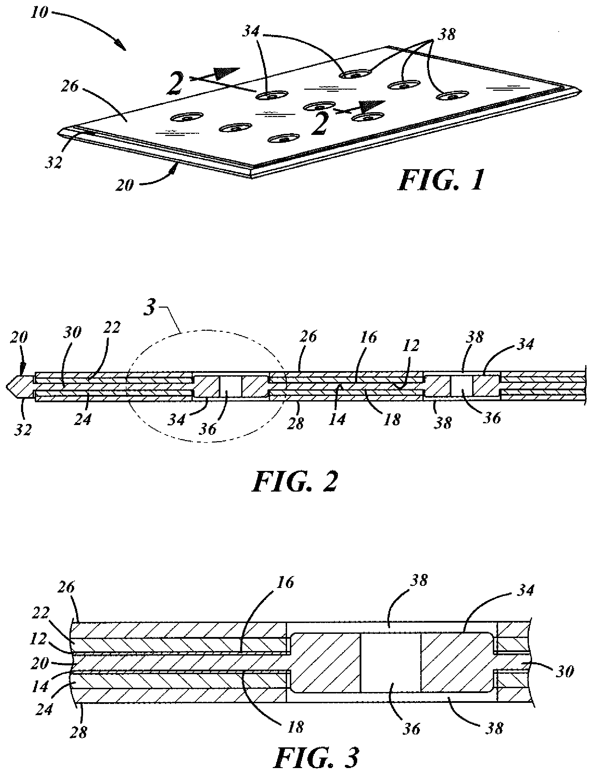

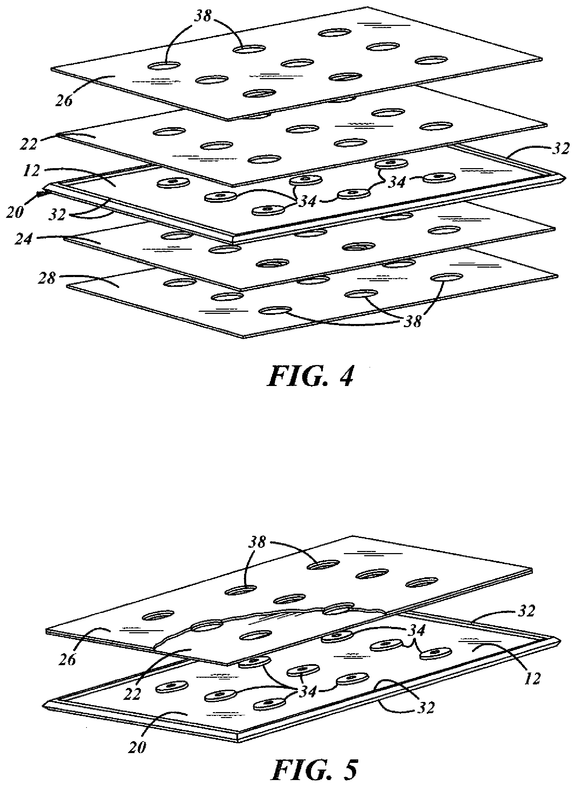

Referring in more detail to the drawings, Figures 1-4 illustrate a bipolar plate assembly 10 such as a plate for a lead acid battery with electrically conductive electrodes 12 and 14 received on opposed faces 16 and 18 of a frame or substrate 20 with a layer of paste 22 received on the electrode 12 with a separator 26 over the paste 22 and a layer of paste 24 received on the electrode 14 with a separator 28 over the paste 24.

The substrate 20 may have a generally planar panel 30 with raised edges 32 extending around its perimeter and projecting outwardly from both faces 16 and 18 of the panel 30. The electrodes 12, 14, paste 22, 24 and separators 26, 28 may be received within the edges of the substrate 20. The panel 30 may also include at least one and usually a plurality of spaced apart protuberances 34 arranged in a predetermined configuration and projecting outwardly of both faces of the panel 30. The protuberances 34 may have a circular perimeter and planar outer faces and at least some of the protuberances 34 may have through-holes 36 which when assembled in a battery may provide channels or passages extending transversely through a series of stacked plates. The substrates 20 may be of a suitable plastic material which may be dielectric. The separators 26 and 28 may have clearance holes 38 in which the protuberances 34 are received.

For a bipolar lead acid battery plate 10, the electrically conductive electrodes 12 and 14 may be a thin sheet of film or lead or lead alloy received on its associated face of the substrate 20 and if desired may be attached to the substrate 20 by a suitable adhesive. To provide an anode, one of the electrodes 12, 14 may be coated with a layer of negative paste (active material) and to provide a cathode, the other electrode 14, 12 may be coated with a layer of positive paste (active material), and the separators 26, 28 may be made of an absorbent glass mat (AGM) or other layer or film of a suitable porous material. The separators 26, 28 and the layers of paste 22, 24 may encircle the protuberances 34 but at least substantially do not overlay the outer faces of the protuberances 34. The construction of bipolar lead-acid battery plates and their assembly and use in a lead-acid battery is known and understood by persons skilled in the art and thus will not be further described.

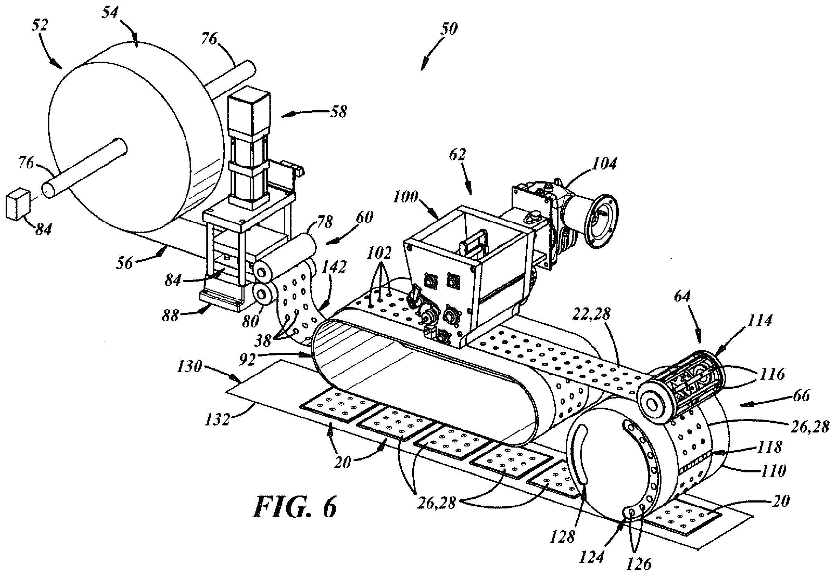

As shown in Figures 6-8 a mass production line 50 may make and paste a series of separators 26, 28 and apply them to one face of a series of separate substrates 20. The substrates 20 may then be turned over and a second production line substantially the same as the first line 50 may make and paste a series of separators and dispose them on the other side of the series of substrates to provide battery plates 10 with both electrodes 12, 14 having a layer of paste 22, 24 thereon covered by an associated separator 26, 28. Typically, one of the production lines 50 would apply a positive paste on a separator 26, 28 received on one side of the substrate 20 and the other line would apply a negative paste and an associated separator 28, 26 received on the other side of the substrate 20 to provide a bipolar battery plate 10. Unipolar plates or end plates with paste and a separator on only one side of a plate may also be made by a production line 50.

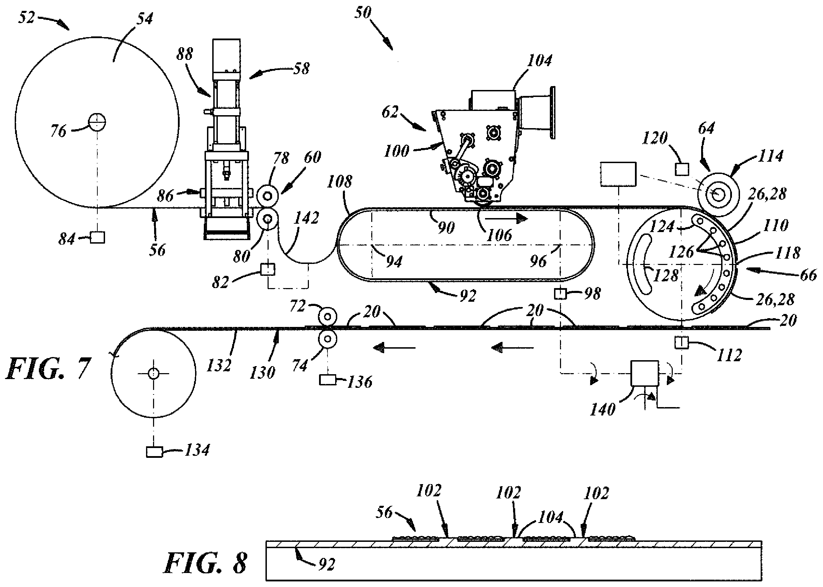

As shown in Figures 6 and 7 the production line 50 may include an unwinding station 52 for a roll 54 of a longitudinally elongate web 56 of an absorbent glass mat (AGM), a station 58 forming clearance holes 38 through the web 56 for receiving protuberances 34 of substrates 20, a feed station 60 for unwinding the roll 54 of web 56 and moving the web 56 through the clearance hole forming station 58, a paster station 62, a cutter station 64 to sever the pasted web 56 into separate individual separators 26, 28 of a predetermined length, and a transfer station 66 to dispose an individual pasted separator 26, 28 on an associated one of a series of separate substrates 20 advanced through the transfer station 66 such as by a conveyor 130. Downstream of the transfer station 66, desirably the pasted separator 26, 28 may be slightly pressed onto its associated substrate 20 such as by passing them and an underlying portion of a conveyor belt 132 through the nip of a pair of rollers 72 and 74. This may provide a substantially uniform thickness of the substrates 20 with the paste 22, 24 and separators 26, 28 thereon, ensure good contact of the paste 22, 24 with its associated electrode 12, 14 and sufficiently attach the separator 26, 28 to its associated pasted substrate 20 to facilitate subsequent assembly of plates into a battery.

In the unwinding station 52, a roll of an elongate web 56 of separator material such as an AGM may be received on a rotatable arbor 76 and in operation of the line 50 unwound by the web 56 passing through the nip of a pair of feed rollers 78, 80 driven for co-rotation by a desirably variable speed electric motor 82 such as a stepper motor. An adjustable air brake 84 may be connected to the arbor 76 to maintain the web 56 in tension or taut between the feed rollers 78, 80 and the roll 54 of the web 56 as it is being unwound. If the substrate 20 includes protuberances 34, corresponding clearance holes 38 may be formed in the web 56 in the station 58 such as by punching dies 86 received in and actuated by a press 88. Alternatively, the clearance holes 38 in the web 56 could be formed by a pair of rotary dies through the nip of which the web 56 passes with the tangential speed at their nip being the same as the linear speed at which the web 56 is advanced through the forming station 58 by the feed rollers 78, 80. The pair of rotary cutting dies may be driven by a variable speed motor such as a stepper motor synchronized with the speed of the feed rollers 78, 80 which may be driven desirably by another stepper motor 82. Optionally, the clearance hole forming station 58 can be eliminated and any desired clearance holes 38 formed in the web 56 before it is wound into a roll 54 and placed on the arbor 76 of the unwinding station 52.

In the paster station 62 the web 56 may be received on a upper run 90 of a continuous belt 92 received over a pair of spaced apart rollers 94, 96 journaled for rotation with preferably the downstream roller 96 being driven by a variable speed electric motor 98 such as a stepper motor to advance the web 56 under a paste hopper 100 and through the paster station 62. The belt 92 may be made of stainless steel and as shown in Figure 8 may include circular protrusions or bosses 102 in a configuration complimentary to and received in the corresponding clearance holes 38 in the web 56 and desirably having an outer substantially planar face 104 substantially in the plane of the upper face of the web 56 to inhibit paste 22, 24 applied to the upper face of the web 56 from entering the clearance holes 38 in the web 56. The paste hopper 100 may be of conventional construction and in operation may discharge paste 22, 24 through an orifice 106 onto the upper or first surface 108 of the web 56 as it is advanced under the orifice 106. The orifice 106 may extend substantially across the transverse width of the web 56.

Downstream of the paster station 62, the pasted web 56 may pass into the transfer station 66 and be received on the periphery of a transfer cylinder 110 journaled for rotation and driven by a variable speed motor 112 such as a stepper motor. Desirably, while the web 56 is on the transfer cylinder 110 it may be severed into a series of succeeding separate individual pasted separators 26, 28 such as by a cutter assembly 114 journaled for rotation and having at least one and desirably a plurality of cutter blades 116 of sufficient length to extend transversely across the web 56. The speed of rotation of the cutter blades 116 may be synchronized with the rotary speed of the transfer cylinder 110 to provide the desired predetermined length of each individual separator 26, 28 with the web 56 being severed in the nip between a rotary blade and the transfer cylinder 110. The tangential velocity or speed of the periphery of the transfer cylinder 110 may be greater than the immediately upstream speed of the web 56 when it engages with the transfer cylinder 110 to provide a gap or spacing 118 between adjacent individual separators 26, 28 received on the transfer cylinder 110. This may also maintain tension on the pasted web 56 before it is severed. The cutter blades 116 may be rotated by a variable speed motor 120 such as a stepper motor.

The individual separators 26, 28 may be retained on the transfer cylinder 110 by a vacuum applied to a plurality of circumferentially and axially spaced apart ports 122 opening onto the periphery of the transfer cylinder 110 and underlying the individual separators 26, 28. As the transfer cylinder 110 rotates it may depose an individual pasted separator 26, 28 onto one of a series of substrates 20 by interrupting or stopping the vacuum applied to the ports 122 preferably sequentially and if need be by applying preferably sequentially an atmospheric or super atmospheric pressure to the ports 122. Vacuum retaining and atmospheric or super atmospheric release pressure may be supplied to the ports 122 through adjustable slip rings 124 communicating with generally axially extending passages 126 in the transfer cylinder 110 communicating with the ports 122 which open into the passages 126. If desired, after the vacuum ports 122 have released and deposited an independent separator 26, 28 on a substrate 20 they may be rotatably advanced to communicate with slip rings 128 supplying to them a super atmospheric pressure to clean them before they are further rotated to receive and retain another individual pasted separator 26, 28 severed from the web 56.

The substrates 20 may be advanced under the transfer cylinder 110 by a conveyor 130 which may include a continuous belt 132 with a run underlying the transfer cylinder 110 and carrying thereon a series of equally spaced apart substrates 20. This conveyor belt 132 may be driven by a variable speed motor 134 such as a stepper motor to advance the substrates 20 under the transfer cylinder 110 at the same or substantially the same linear speed as the tangential peripheral speed of the pasted surface of the individual separators 26, 28. Each separator 26, 28 may be released from the transfer cylinder 110 and deposited on an underlying substrate 20 with its clearance holes 38 in registration with the substrate protuberances 34 and within the boundary of the edges 32 of such substrate 20.

Downstream of the transfer cylinder 110, if desired each substrate 20 with a pasted separator 26, 28 received thereon may pass through the nip of cylindrical rotating rollers 72 and 74 to apply a force urging a separator 26, 28 onto its associated substrate 20. Desirably these rollers 72, 74 are driven by a variable speed stepper motor 136 at the same tangential speed of their nip as the linear speed at which the combined separator 26, 28, paste 22, 24 and substrate 20 is advanced through the rollers 72, 74.

In operation of the production line 50, the various variable speed motors such as stepper motors may be controlled by a suitable conventional electronic controller 140 (known to skilled persons) to synchronize their various speeds and phase relationship of operation. For example, the speed of a preferably stepper motor 98 driving the paster belt 92 may be set to provide the desired rate of production and used as the set point for the speed and synchronization of separate preferably stepper motors operating each of the paste hopper 100, clearance hole forming station punching or rotary dies, rotating the transfer cylinder 110, and driving the conveyor 130 advancing the substrates 20 relative to the transfer cylinder 110. To provide the desired length of the individual separators 26, 28, the speed and synchronization of the preferably stepper motor 120 driving the cutter assembly 114 (severing the web 56 into individual separators 26, 28) may also be varied and synchronized relative to the speed at which the transfer cylinder 110 is rotated.

The speed of the web feed rollers 78, 80 may be varied and synchronized relative to the speed at which the paster belt 92 is advanced to maintain a slack loop 142 of the web 56 between the feed rollers 78, 80 and the paster belt 92. This maintaining of the length or depth of the slack loop 142 may be accomplished in various ways such as by synchronizing the speed of the feed rollers 78, 80 with the speed at which the belt 92 advances the web 56 under the paste hopper 100 or more simply by sensors determining a minimum and maximum vertical depth of the slack loop 142 and providing signals to control the speed at which the feed rollers 78, 80 driven by the motor 82 advance the web 56 to maintain the loop 142 between the desired maximum and minimum depth of the slack loop 142. The speed or cycling of the clearance hole forming station press 88 operating the punching dies 86 or the speed of the rotary cutting dies may be varied and synchronized with the speed at which the feed rollers 78, 80 advance the web 56 through the clearance hole forming station 58. The magnitude of the resistance to the unwinding rotation of the web roll 54 produced by the air brake 84 may also be controlled relative to the extent to which the web 56 is unwound and advanced by the feed rollers 78, 80 and if desired may be increased as the radius or diameter of the web roll 54 decreases as it is being unwound.

It is believed that this production line 50 can make, paste and dispose on substrates 20 at least 100 lineal feet per minute of pasted separators 26, 28 disposed on the substrates 20. This production line 50 could also be configured to simultaneously run two separate parallel webs 56 side by side to produce at least 200 lineal feet per minute of pasted separators 26, 28 disposed on substrates 20.

## Claims

1. A production line (50) for making, pasting and applying separators (26, 28) to substrates (20) for battery plates (10) comprising:
a paster station (62) configured to apply a battery paste (22, 24) to a first side of an elongate web (56) of a separator material;
a cutter station (64) downstream of the paster station (62) configured to sever the pasted web (56) into a series of separate individual separators (26, 28) with paste on their first side; and
a transfer station (66) configured to dispose an individual separator (26, 28) of the series on one of a series of substrates (20) with the pasted first side of the separator (26, 28) facing the substrate (20) on which it is disposed, wherein the transfer station (66) includes a rotatable cylinder (110) on which individual separators (26, 28) are received and releasably retained by a plurality of ports (122) opening onto the periphery of the cylinder (110) and underlying the individual separators (26, 28), and thereafter individual separators (26, 28) are released from the cylinder (110) by at least decreasing the vacuum applied to the ports (122) and disposed on an associated substrate (20), wherein
the cutter station (64) includes at least one blade (116) extending transversely across the web (56) and journaled for rotation to sever the web (56) into separate individual separators (26, 28) in a nip between the at least one blade (116) and the rotatable cylinder (110) as the pasted web (56) passes through the nip, and
the transfer station (66) overturns the individual separators (26, 28) end for end by reversing the direction of travel of the individual separators (26, 28) relative to the direction of travel of the web (56) before the individual separators (26, 28) were severed from the web (56) and deposits them on an associated substrate (20), and which also comprises a conveyor (130) advancing a series of substrates (20) relative to the transfer station (66) as individual separators (26, 28) are deposited on the substrates (20) by the transfer station (66).

2. The production line (50) of claim 1, wherein the substrates (20) include at least two protuberances (34) and upstream of the paster station (62) the web (56) includes clearance holes (38) configured to register with the protuberances (34), and the paster station (62) includes a belt (92) with an outer face having protrusions (102) which register with the clearance holes (38) in the web (56) and inhibit paste applied to the first face of the web (56) from being disposed in the clearance holes (56).

3. The production line of claim 1, wherein the individual separators (26, 28) on the rotatable cylinder (110) are released by applying an atmospheric or a superatmospheric pressure to the ports (122) underlying the separators (26, 28).

4. The production line (50) of claim 1, which also comprises downstream of the rotatable cylinder (110) a pair of rollers (72, 74) through the nip of which substrates (20) with the individual separators (26, 28) thereon pass to force the separators (26, 28) onto their associated substrates (20).

5. The production line (50) of claim 1, which also comprises upstream of the paster station (62) a rotatable arbor (76) configured to receive a roll (54) of the web (56) and downstream of the arbor (76) and upstream of the paster station (62), feed rollers (78, 80) through which the web (56) passes as it is uncoiled from the roll (54) of the web (56) on the arbor (76).

6. The production line (50) of claim 5, which also comprises downstream of the arbor (76) and upstream of the feed rollers (78, 80) a mechanism forming a predetermined configuration of clearance holes (38) through the web (56) or which also comprises downstream of the arbor (76) and upstream of the feed rollers (78, 80) a set of rotary dies through which the web (56) passes to form a predetermined configuration of a plurality of clearance holes (38) through the web (56).

7. A method of making, pasting, and applying separators (26, 28) to substrates (20) for battery plates (50) by means of the production line (50) according to one of the preceding claims, comprising:
providing a longitudinally elongate web (56) of a separator material having first and second opposite sides;
applying a layer of battery paste to a first side of the web (56) of separator material;
severing the pasted web (56) into a series of separate individual separators (26, 28) with paste on the first side; and
disposing a separate separator (26, 28) of the series on one of a series of substrates (20) with the pasted first side facing the substrate (20) on which it is disposed, which also comprises
turning over end for end the individual separators (26, 28) by reversing the direction of travel of the individual separators (26, 28) relative to the direction of travel of the web (56) before the individual separators (26, 28) were severed from the web (56), and
disposing each turned over separator (26, 28) on one of the series of substrates (20).

8. The method of claim 7, which also comprises before applying the layer of paste to the web (56) forming a plurality of clearance holes (38) through the web (58) to register with protuberances (34) on the substrates (20), and removably inserting a plug into the clearance holes (38) to inhibit a layer of paste from entering the clearance holes (38).

9. The method of claim 8, wherein the depositing of separators (26, 28) on the substrates (20) includes registering the clearance holes (38) with the protuberances (34) on the substrates (20) so that the clearance holes (38) encircle the protuberances (34) and the substrates (20) do not overly at least part of the outer faces of the protuberances (34).

## Patentansprüche

1. Eine Herstellungslinie (50) zum Herstellen, Pastieren und Auftragen von Separatoren (26, 28) auf Substrate (20) für Batterieplatten (10), umfassend:
eine Pastierstation (62), die vorgesehen ist, um eine Batteriepaste (22, 24) auf eine erste Seite einer länglichen Bahn (56) eines Separatormaterials aufzutragen;
eine Schneidestation (64) stromabwärts der Pastierstation (62), die vorgesehen ist, um die mit Paste versehene Bahn (56) in eine Reihe von separaten, einzelnen Separatoren (26, 28), die Paste auf ihrer jeweiligen ersten Seite aufweisen, zu trennen; und
eine Transferstation (66) die vorgesehen ist, um einen einzelnen Separator (26, 28) der Reihe auf eines einer Reihe von Substraten (20) abzulegen, wobei die mit Paste versehene erste Seite des Separators (26, 28) dem Substrat (20) zugewandt ist, auf dem er abgelegt ist, wobei die Transferstation (66) einen drehbaren Zylinder (110) umfasst, auf dem einzelne Separatoren (26, 28) aufgenommen und
lösbar von einer Vielzahl von Anschlüssen (122) gehalten werden, die sich in die Umfangsfläche des Zylinders (110) öffnen und unter den einzelnen Separatoren (26, 28) liegen, und danach werden die einzelnen Separatoren (26, 28) aus dem Zylinder (110) gelöst, indem mindestens das auf die Anschlüsse (122) wirkende Vakuum reduziert wird, und werden auf einem zugehörigen Substrat (20) abgelegt, wobei
die Schneidestation (64) mindestens eine Klinge (116) umfasst, die sich quer über die Bahn (56) erstreckt und zur Drehung veranlasst wird, um die Bahn (56) in separate, einzelne Separatoren (26, 28) zu teilen, in einem Spalt zwischen der mindestens einen Klinge (116) und dem drehbaren Zylinder (110), wenn sich die mit Paste versehene Bahn (56) durch den Spalt bewegt, und
die Transferstation (66) dreht die einzelnen Separatoren (26, 28) vollständig um, indem die Bewegungsrichtung der einzelnen Separatoren (26, 28) bezogen auf die Bewegungsrichtung der Bahn umgekehrt wird, bevor die einzelnen Separatoren (26, 28) von der Bahn (56) abgeschnitten wurden, und legt sie auf einem zugehörigen Substrat (20) ab, und die Transferstation (66) umfasst auch ein Förderband (130), das eine Reihe von Substrate (20) bezogen auf die Transferstation (66) befördert, wenn einzelne Separatoren (26, 28) auf den Substraten (20) von der Transferstation (66) abgelegt werden.

2. Die Herstellungslinie (50) gemäß Anspruch 1, wobei die Substrate (20) mindestens zwei Ausstülpungen (34) aufweisen und stromaufwärts der Pastierstation (62) weist die Bahn (56) Durchgangslöcher (38) auf, die vorgesehen sind, und mit den Ausstülpungen (34) in Eingriff zu gelangen, und die Pastierstation (62) umfasst einen Riemen (92) mit einer Außenfläche, die Vorsprünge (102) aufweist, die mit den Durchgangslöchern (38) in der Bahn (56) in Eingriff gelangen und verhindern, dass auf die erste Fläche der Bahn (56) aufgetragene Paste in den Durchgangslöchern (56) abgelegt wird.

3. Die Herstellungslinie gemäß Anspruch 1, wobei die einzelnen Separatoren (26, 28) auf dem drehbaren Zylinder (110) freigegeben werden, indem ein atmosphärischer oder ein überatmosphärischer Druck auf die unter den Separatoren (26, 28) liegenden Anschlüsse (122) ausgeübt wird.

4. Die Herstellungslinie (50) gemäß Anspruch 1, die ferner stromabwärts des drehbaren Zylinders (110) ein Walzenpaar (72, 74) umfasst, durch deren Spalt Substrate (20) mit den einzelnen Separatoren (26, 28) darauf passieren, um die Separatoren (26, 28) auf ihre zugehörigen Substrate (20) zu drängen.

5. Die Herstellungslinie (50) gemäß Anspruch 1, die ferner stromaufwärts der Pastierstation (62) eine drehbare Achse (76) aufweist, die konfiguriert ist, um eine Walze (54) der Bahn (56) aufzunehmen und stromabwärts der Achse (76) und stromaufwärts der Pastierstation (62) Zuführwalzen (78, 80) aufweist, durch die die Bahn läuft, wenn sie von der Walze (54) der Bahn (56) auf der Achse (76) abgewickelt wird.

6. Die Herstellungslinie (50) gemäß Anspruch 5, die weiterhin stromabwärts der Achse (76) und stromaufwärts der Zuführwalzen (78, 80) einen Mechanismus aufweist, der eine vorbestimmte Konfiguration von Durchgangslöchern (38) durch die Bahn (56) bildet oder der ebenso stromabwärts der Achse (76) und stromaufwärts der Zuführwalzen (78, 80) einen Satz drehender Matrizen aufweist, durch die die Bahn (56) läuft, um eine vorbestimmte Konfiguration einer Vielzahl von Durchgangslöchern (38) durch die Bahn (56) zu bilden.

7. Ein Verfahren zum Herstellen, Pastieren und Auftragen von Separatoren (26, 28) auf Substrate (20) für Batterieplatten (50) mittels der Herstellungslinie (50) gemäß einem der vorhergehenden Ansprüche, umfassend:
Bereitstellen einer längsverlaufenden, länglichen Bahn (56) eines Separatormaterials mit einer ersten und zweiten gegenüberliegenden Seite;
Auftragen einer Schicht von Batteriepaste auf eine erste Seite der Bahn (56) von Separatormaterial;
Abtrennen der mit Paste versehenen Bahn (56) in eine Reihe separater, einzelner Separatoren (26, 28) mit Paste auf der ersten Seite; und
Ablegen eines separaten Separators (26, 28) der Reihe auf eines einer Reihe von Substraten (20), wobei die mit Paste versehene erste Seite dem Substrat (20), auf dem sie abgelegt ist, zugewandt ist, was weiterhin umfasst
vollständiges Umdrehen der einzelnen Separatoren (26, 28) durch Umkehren der Bewegungsrichtung der individuellen Separatoren (26, 28) bezogen auf die Bewegungsrichtung der Bahn (56), bevor die einzelnen Separatoren (26, 28) von der Bahn (56) abgeschnitten wurden, und Ablegen jedes umgedrehten Separators (26, 28) auf einem der Reihe von Substraten (20).

8. Das Verfahren gemäß Anspruch 7, welches weiterhin vor Auftragen der Pastenschicht auf die Bahn (56) Ausbilden einer Vielzahl Durchgangslöcher (28) durch die Bahn (58) umfasst, um mit Ausstülpungen (34) auf dem Substrat (20) in Eingriff zu kommen, und lösbares Einsetzen eines Stopfens in die Durchgangslöcher (38) um eine Pastenschicht zu hindern, in die Durchgangslöcher (38) zu treten.

9. Das Verfahren gemäß Anspruch 8, wobei das Ablegen der Separatoren (26, 28) auf dem Substrat (20) das Eingreifen der Durchgangslöcher (38) mit den Ausstülpungen (34) auf den Substraten (20) umfasst, sodass die Durchgangslöcher (38) die Ausstülpungen (34) umgeben und die Substrate (20) nicht wenigstens einen Teil der Außenflächen der Ausstülpungen (34) überlagern.

## Revendications

1. Chaîne de production (50) permettant de fabriquer, de coller et d'appliquer des séparateurs (26, 28) à des substrats (20) pour des plaques de batterie (10) comportant :
un poste d'encolleuse (62) conçu pour appliquer une pâte de batterie (22, 24) à un premier côté d'une courroie (56) allongée d'un matériau de séparateur ;
un poste de découpe (64), en aval du poste d'encolleuse (62), conçu pour sectionner la courroie (56) collée en une série de séparateurs (26, 28) individuels séparés avec une pâte sur leur premier côté ; et
un poste de transfert (66) conçu pour disposer un séparateur (26, 28) individuel de la série sur un substrat d'une série de substrats (20), le premier côté collé du séparateur (26, 28) faisant face au substrat (20) sur lequel il est disposé, dans lequel le poste de transfert (66) inclut un cylindre (110) rotatif sur lequel des séparateurs (26, 28) individuels sont reçus et retenus de manière libérable par une pluralité d'orifices (122) s'ouvrant sur la périphérie du cylindre (110) et sous-jacents aux séparateurs (26, 28) individuels et par la suite des séparateurs (26, 28) individuels sont libérés à partir du cylindre (110), au moins en diminuant le vide appliqué aux orifices (122), et disposés sur un substrat (20) associé, dans lequel
le poste de découpe (64) inclut au moins une lame (116) s'étendant de manière transversale à travers la courroie (56) et programmée pour une rotation afin de sectionner la courroie (56) en séparateurs (26, 28) individuels séparés, dans un écartement entre la au moins une lame (116) et le cylindre (110) rotatif lorsque la courroie (56) collée passe à travers l'écartement et
le poste de transfert (66) retourne les séparateurs (26, 28) individuels bout à bout en inversant la direction de déplacement des séparateurs (26, 28) individuels par rapport à la direction de déplacement de la courroie (56), avant que les séparateurs (26, 28) individuels ne soient sectionnés de la courroie (56), et les dépose sur un substrat (20) associé et qui comporte également un convoyeur (130) faisant avancer une série de substrats (20) par rapport au poste de transfert (66) tandis que des séparateurs (26, 28) individuels sont déposés sur les substrats (20) par le poste de transfert (66).

2. Chaîne de production (50) selon la revendication 1, dans laquelle les substrats (20) incluent au moins deux protubérances (34) et, en amont du poste de collage (62), la courroie (56) inclut des trous de dégagement (38) conçus pour s'aligner sur les protubérances (34) et le poste de collage (62) inclut une courroie (92) avec une face extérieure ayant des saillies (102) qui s'alignent sur les trous de dégagement (38) dans la courroie (56) et empêchent que la pâte appliquée à la première face de la courroie (56) ne soit disposée dans les trous de dégagement (56).

3. Chaîne de production selon la revendication 1, dans laquelle les séparateurs (26, 28) individuels sur le cylindre (110) rotatif sont libérés par application d'une pression atmosphérique ou d'une pression élevée sur les orifices (122) sous-jacents aux séparateurs (26, 28).

4. Chaîne de production (50) selon la revendication 1, qui comporte également, en aval du cylindre (110) rotatif, une paire de rouleaux (72, 74) à travers l'écartement desquels les substrats (20) ayant sur eux les séparateurs (26, 28) individuels passent pour forcer les séparateurs (26, 28) contre leurs substrats (20) associés.

5. Chaîne de production (50) selon la revendication 1, qui comporte également, en amont du poste d'encolleuse (62), une tige (76) rotative conçue pour recevoir un rouleau (54) de la courroie (56) et, en aval de la tige (76) et en amont du poste d'encolleuse (62), des rouleaux d'alimentation (78, 80) à travers lesquels la courroie (56) passe tandis qu'elle est déroulée du rouleau (54) de la courroie (56) sur la tige (76).

6. Chaîne de production (50) selon la revendication 5, qui comporte également, en aval de la tige (76) et en amont des rouleaux d'alimentation (78, 80), un mécanisme formant une configuration prédéterminée de trous de dégagement (38) à travers la courroie (56) ou qui comporte également, en aval de la tige (76) et en amont des rouleaux d'alimentation (78, 80), un jeu de matrices rotatives à travers lesquelles la courroie (56) passe pour former une configuration prédéterminée d'une pluralité de trous de dégagement (38) à travers la courroie (56).

7. Procédé de fabrication, de collage et d'application de séparateurs (26, 28) à des substrats (20) pour des plaques de batterie (50) au moyen de la chaîne de production (50) selon une des revendications précédentes, comportant :
la fourniture d'une courroie (56) allongée longitudinalement d'un matériau de séparateur ayant des premier et second côtés opposés ;
l'application d'une couche de pâte de batterie à un premier côté de la courroie (56) de matériau de séparateur ;
le sectionnement de la courroie (56) collée en une série de séparateurs (26, 28) individuels séparés avec de la pâte sur le premier côté ; et
la disposition d'un séparateur (26, 28) séparé de la série sur un substrat d'une série de substrats (20), le premier côté collé faisant face au substrat (20) sur lequel il est disposé, qui comporte également
le retournement bout à bout des séparateurs (26, 28) individuels par inversion de la direction de déplacement des séparateurs (26, 28) individuels par rapport à la direction de déplacement de la courroie (56), avant que les séparateurs (26, 28) individuels ne soient sectionnés de la courroie (56), et
la disposition de chaque séparateur (26, 28) retourné sur un substrat de la série de substrats (20).

8. Procédé selon la revendication 7, qui comporte également, avant l'application de la couche de pâte sur la courroie (56), la formation d'une pluralité de trous de dégagement (38) à travers la courroie (58) pour les aligner sur les protubérances (34) sur les substrats (20) et l'insertion de manière amovible d'un bouchon dans les trous de dégagement (38) pour empêcher une couche de pâte d'entrer dans les trous de dégagement (38).

9. Procédé selon la revendication 8, dans lequel le dépôt de séparateurs (26, 28) sur les substrats (20) inclut l'alignement des trous de dégagement (38) sur les protubérances (34) sur les substrats (20), de sorte que les trous de dégagement (38) encerclent les protubérances (34) et que les substrats (20) ne recouvrent pas au moins une partie des faces extérieures des protubérances (34).
